# EUROPEAN PATENT APPLICATION

(11) **EP 4 597 489 A1**
(43) Date of publication of application: **06.08.2025**
(21) Application number: 25154588.5
(22) Date of filing: 29.01.2025
(51) Int. Cl.: G10L 15/00, G06F 40/42, G06F 40/58, G10L 17/00, G10L 15/26, G10L 21/0272

(54) **ON-DEVICE ARTIFICIAL INTELLIGENCE (AI) DEVICE OF PROVIDING MULTI-WAY INTERPRETATION SERVICE AND METHOD THEREOF**

(30) Priority: 02.02.2024 KR 20240016657; 04.06.2024 KR 20240073163
(71) Applicant: LX Semicon Co., Ltd., Daejeon 34027 (KR)
(72) Inventor: LEE, Yun Tae, 34027 Daejeon (KR)
(74) Representative: Goddar, Heinz J.

(57) **Abstract**

An on-device artificial intelligence (AI) device capable of interpreting a conversation between multiple speakers in real time and a method thereof are provided. The AI device can include an input module where utterance voice of a speaker is input; and a processor configured to perform AI processing to interpret the utterance voice of the speaker into a target language, wherein the processor is configured to when utterance voices are input from a plurality of speakers, preprocess the utterance voices, classify the preprocessed utterance voices by speaker, when a specific speaker is selected from the plurality of speakers, extract utterance voice of the selected specific speaker from the classified utterance voices by speaker, and interpret the utterance voice of the specific speaker into a target language and output it.

## Description

### [Technical Field]

The present disclosure relates to an on-device AI device capable of interpreting conversations between multiple speakers in real time and a method for providing a multi-party interpretation service thereof.

### [Related Art]

In general, artificial intelligence is a field of computer engineering and information technology that studies methods for enabling computers to perform human intelligence-based thinking, learning, self-development, etc., and means enabling computers to imitate human intelligent behavior.

In addition, artificial intelligence does not exist in itself, but is directly or indirectly related to other fields of computer science. In particular, in modern times, attempts are being made to introduce artificial intelligence elements into various fields of information technology and utilize them to solve problems in those fields.

Meanwhile, technologies that recognize and learn surrounding situations using artificial intelligence and provide information desired by users in a desired form or perform actions or functions desired by users are being actively studied.

In addition, electronic devices that provide such various actions and functions can be called artificial intelligence devices.

Recently, on-device AI that can process information on the terminal device itself without having to connect to a server or cloud has been attracting attention.

On-device AI has the advantage of being fast and advantageous in terms of privacy protection and cost because it processes AI calculations on the terminal device owned by the user without sending data to a server or cloud.

However, among the services that can be provided through on-device AI at present, there is still a problem that there is a limitation in the completeness of real-time interpretation service.

In other words, the current on-device AI not only cannot accurately interpret conversations between multiple speakers in real time, but also cannot identify the voices of multiple speakers to provide selective interpretation services.

Therefore, in the future, it is necessary to develop an on-device AI device that can accurately interpret conversations between multiple speakers in real time without separate equipment.

### [Disclosure of the invention]

### [Technical Problem]

The present disclosure aims to solve the above-mentioned problems and other problems.

The present disclosure aims to provide an on-device AI device and a method for providing a multi-party interpretation service thereof that can accurately interpret conversations between multiple speakers in real time by extracting the utterance voice of a specific speaker from among the utterance voices classified by the speaker when a specific speaker is selected from among multiple speakers and interpreting it into a target language.

### [Technical Solution]

An on-device AI device according to one embodiment of the present disclosure can include an input module where utterance voice of a speaker is input; and a processor configured to perform AI processing to interpret the utterance voice of the speaker into a target language, wherein the processor is configured to when utterance voices are input from a plurality of speakers, preprocess the utterance voices, classify the preprocessed utterance voices by speaker, when a specific speaker is selected from the plurality of speakers, extract utterance voice of the selected specific speaker from the classified utterance voices by speaker, and interpret the utterance voice of the specific speaker into a target language and output it.

An AI interpretation processing device according to one embodiment of the present disclosure is an AI interpretation processing device that is communicatively connected to an on-device AI device, and can include a communication module connected to the on-device AI device; a memory storing an AI model for AI interpretation processing; and a processor configured to perform the AI interpretation processing in response to an interpretation agency service request from the on-device Al device, when receiving the interpretation agency service request from the on-device AI device, determine whether self-interpretation processing is possible by measuring an amount of the AI interpretation processing corresponding to the interpretation agency service request, when it is determined that self-interpretation processing is possible, transmit an approval for the interpretation agency service request to the on-device AI device, and when receiving utterance voice data of a speaker and target language information to be interpreted from the on-device AI device, interpret the utterance voice of the speaker into the target language and output it.

According to one embodiment of the present disclosure, an on-device AI system includes at least one Al interpretation processing device that is communicatively connected to an on-device AI device, and can include an on-device AI device configured to perform AI interpretation processing to interpret an utterance voice of a speaker into a target language, and at least one AI interpretation processing device configured to perform AI interpretation processing in response to an interpretation agency service request from the on-device AI device, wherein when utterance voices are input from a plurality of speakers, the on-device AI device preprocesses the utterance voices, classifies the preprocessed utterance voices by speaker, and when a specific speaker is selected from among the plurality of speakers, extracts the utterance voice of the selected specific speaker from the utterance voices classified by speaker, interprets the utterance voice of the specific speaker into a target language and outputs it, and when a user command requesting an interpretation agency service is input, requests the AI interpretation processing device to perform an interpretation agency service for the utterance voice of the specific speaker, and when an approval for the interpretation agency service request is received from the AI interpretation processing device, the AI interpretation processing device interprets the utterance voice of the specific speaker into the target language. The utterance data of a specific speaker and the target language information to be interpreted can be transmitted to the AI interpretation processing device to be interpreted and output.

The method for providing a multi-party interpretation service of an on-device AI device according to one embodiment of the present disclosure may include receiving utterance voices from a plurality of speakers; preprocessing the utterance voices; classifying the preprocessed utterance voices by speaker; extracting the utterance voice of the selected specific speaker from the utterance voices classified by speaker when a specific speaker is selected from the plurality of speakers; and interpreting and outputting the utterance voice of the specific speaker into a target language. In particular, the method as disclosed herein may be configured or suited to provide a multi-party interpretation service of the on-device AI device as disclosed herein.

### [Effects of the invention]

According to one embodiment of the present disclosure, the on-device AI device extracts the speech voice of the specific speaker from the speech voices distinguished by speaker when a specific speaker is selected from among the multiple speakers and interprets it into a target language, thereby identifying the conversation between multiple speakers by speaker and accurately interpreting it in real time.

In addition, the present disclosure can improve the AI interpretation processing processing speed and the accuracy and service quality of the interpretation processing result value by selecting an AI interpretation processing device located externally and requesting distributed processing of AI interpretation processing when the amount of AI processing for interpreting the speaker's spoken voice exceeds the amount that can be processed by the device itself.

In addition, the present disclosure can minimize power consumption and reduce heat generation by distributing AI interpretation processing together with an AI interpretation processing device located externally, thereby improving performance and lifespan.

### [Brief description of drawings]

FIG. 1 illustrates an artificial intelligence device according to an embodiment of the present disclosure.
FIG. 2 illustrates an artificial intelligence server according to an embodiment of the present disclosure.
FIG. 3 illustrates an artificial intelligence system according to an embodiment of the present disclosure.
FIGS. 4 to 6 are drawings for explaining an on-device AI system according to an embodiment of the present disclosure.
FIGS. 7 and 8 are drawings for explaining an on-device AI device according to an embodiment of the present disclosure.
FIGS. 9 to 11 are drawings for explaining a speaker identification process of an on-device AI device according to an embodiment of the present disclosure.
FIGS. 12 to 15 are drawings for explaining a speaker selection process of an on-device AI device according to an embodiment of the present disclosure.
FIG. 16 is a diagram for explaining a process of setting a target language of an on-device AI device according to an embodiment of the present disclosure.
FIG. 17 and FIG. 18 are diagrams for explaining a process of measuring an amount of AI interpretation processing of an on-device AI device according to an embodiment of the present disclosure.
FIG. 19 to FIG. 23 are diagrams for explaining a method for providing a multi-party interpretation service of an on-device AI device according to an embodiment of the present disclosure.
FIG. 24 and FIG. 25 are diagrams for explaining a method for providing a multi-party interpretation service of an AI interpretation processing device connected to an on-device AI device according to an embodiment of the present disclosure.
FIG. 26 is a diagram for explaining a method for providing a multi-party interpretation service of an on-device AI system according to an embodiment of the present disclosure.

### [Detailed description ]

Hereinafter, the embodiments disclosed in this specification will be described in detail with reference to the attached drawings. Regardless of the drawing symbols, identical or similar components will be given the same reference numbers and redundant descriptions thereof will be omitted. The suffixes "module" and "part" used for components in the following description are given or used interchangeably only for the convenience of writing the specification, and do not have distinct meanings or roles in themselves. In addition, when describing the embodiments disclosed in this specification, if it is determined that a specific description of a related known technology may obscure the gist of the embodiments disclosed in this specification, the detailed description thereof will be omitted. In addition, the attached drawings are only intended to facilitate easy understanding of the embodiments disclosed in this specification, and the technical ideas disclosed in this specification are not limited by the attached drawings, and should be understood to include all modifications, equivalents, and substitutes included in the ideas and technical scope of the present disclosure.

Terms including ordinal numbers such as first, second, etc. may be used to describe various components, but the components are not limited by the terms. The terms are used only for the purpose of distinguishing one component from another.

When a component is referred to as being "connected" or "connected" to another component, it should be understood that it may be directly connected or connected to that other component, but that there may be other components in between. On the other hand, when a component is referred to as being "directly connected" or "directly connected" to another component, it should be understood that there are no other components in between.

Also, throughout this specification, the terms neural network, neural network, and network function may be used interchangeably. A neural network may be composed of a set of interconnected computational units, which may generally be referred to as "nodes." These "nodes" may also be referred to as "neurons." A neural network is composed of at least two or more nodes. The nodes (or neurons) constituting the neural networks may be interconnected by one or more "links."

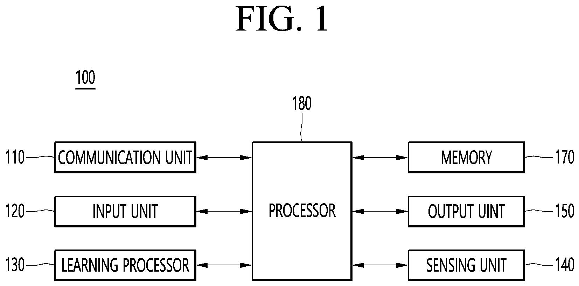

FIG. 1 illustrates an AI device 100 according to an embodiment of the present disclosure.

The AI device 100 may be implemented as a fixed or movable device, such as a TV, a projector, a mobile phone, a smart phone, a desktop computer, a laptop, a digital broadcasting terminal, a personal digital assistant (PDA), a portable multimedia player (PMP), a navigation device, a tablet PC, a wearable device, a set-top box (STB), a DMB receiver, a radio, a washing machine, a refrigerator, a desktop computer, digital signage, a robot, a vehicle, etc.

Referring to FIG. 1, the AI device 100 can include a communication module 110, an input module 120, a learning processor 130, a sensing module 140, an output module 150, a memory 170, and a processor 180.

The communication module 110 can transmit and receive data with external devices, such as other AI devices 100a to 100e or an AI server 200, using wired or wireless communication technology. For example, the communication module 110 can transmit and receive sensor information, user input, learning models, control signals, etc. with external devices.

At this time, the communication technologies used by the communication module 110 include Global System for Mobile communication (GSM), Code Division Multi Access (CDMA), Long Term Evolution (LTE), 5G, Wireless LAN (WLAN), Wi-Fi (Wireless-Fidelity), Bluetooth^{™}, Radio Frequency Identification (RFID), Infrared Data Association (IrDA), ZigBee, Near Field Communication (NFC), etc.

The input module 120 can obtain various types of data.

At this time, the input module 120 can include a camera for inputting a video signal, a microphone for receiving an audio signal, a user input module for receiving information from a user, etc. Here, the camera or microphone can be treated as a sensor, and the signal obtained from the camera or microphone can be referred to as sensing data or sensor information.

The input module 120 can obtain input data to be used when obtaining output using learning data for model learning and the learning model. The input module 120 can obtain unprocessed input data, and in this case, the processor 180 or the learning processor 130 can extract input features as preprocessing for the input data.

The learning processor 130 can learn a model composed of an artificial neural network using the learning data. Here, the learned artificial neural network can be referred to as a learning model. The learning model can be used to infer a result value for new input data that is not learning data, and the inferred value can be used as a basis for judgment to perform a certain action.

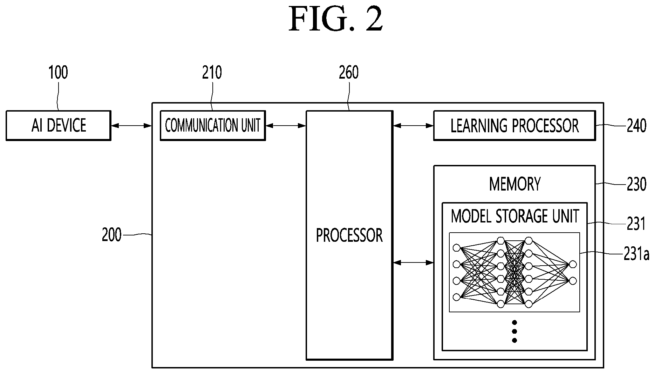

At this time, the running processor 130 can perform AI processing together with the running processor 240 of the AI server 200 of FIG. 2.

At this time, the running processor 130 can include a memory integrated or implemented in the AI device 100. Alternatively, the running processor 130 can be implemented using a memory 170, an external memory directly coupled to the AI device 100, or a memory maintained in an external device.

The sensing module 140 can obtain at least one of internal information of the AI device 100, surrounding environment information of the AI device 100, and user information using various sensors.

At this time, the sensors included in the sensing module 140 include a proximity sensor, an illuminance sensor, an acceleration sensor, a magnetic sensor, a gyro sensor, an inertial sensor, an RGB sensor, an IR sensor, a fingerprint recognition sensor, an ultrasonic sensor, a light sensor, a microphone, a Lidar, a radar, etc.

The output module 150 can generate output related to visual, auditory, or tactile sensations.

At this time, the output module 150 can include a display module that outputs visual information, a speaker that outputs auditory information, a haptic module that outputs tactile information, etc.

The memory 170 can store data that supports various functions of the AI device 100. For example, the memory 170 can store input data, learning data, learning models, learning history, etc. obtained from the input module 120.

The processor 180 can determine at least one executable operation of the AI device 100 based on information determined or generated using a data analysis algorithm or a machine learning algorithm. In addition, the processor 180 can control components of the AI device 100 to perform the determined operation.

To this end, the processor 180 can request, search, receive, or utilize data from the running processor 130 or the memory 170, and control components of the AI device 100 to execute a predicted operation or an operation determined to be desirable among at least one executable operation.

At this time, if linkage of an external device is required to perform the determined operation, the processor 180 can generate a control signal for controlling the external device and transmit the generated control signal to the external device.

The processor 180 can obtain intent information for the user input and determine the user's requirement based on the obtained intent information.

At this time, the processor 180 can obtain intent information corresponding to the user input by using at least one of a Speech To Text (STT) engine for converting a voice input into a string or a natural language processing (NLP) engine for obtaining intent information of a natural language.

At this time, at least one of the STT engine or the NLP engine can be configured with an artificial neural network at least partially learned according to a machine learning algorithm. In addition, at least one of the STT engine or the NLP engine can be learned by the learning processor 130, learned by the learning processor 240 of the AI server 200, or learned by distributed processing of these.

The processor 180 can collect history information including the operation content of the AI device 100 or the user's feedback on the operation, and store it in the memory 170 or the learning processor 130, or transmit it to an external device such as the AI server 200. The collected history information can be used to update the learning model.

The processor 180 can control at least some of the components of the AI device 100 in order to drive the application program stored in the memory 170. Furthermore, the processor 180 can operate two or more of the components included in the AI device 100 in combination to drive the application program.

FIG. 2 illustrates an AI server 200 according to an embodiment of the present disclosure.

Referring to FIG. 2, the AI server 200 can mean a device that trains an artificial neural network using a machine learning algorithm or uses a trained artificial neural network. Here, the AI server 200 can be composed of multiple servers to perform distributed processing, and can be defined as a 5G network. At this time, the AI server 200 can be included as a part of the AI device 100 and can perform at least a part of the AI processing together.

The AI server 200 can include a communication module 210, a memory 230, a learning processor 240, a processor 260, etc.

The communication module 210 can transmit and receive data with an external device such as the AI device 100.

The memory 230 can include a model storage module 231. The model storage module 231 can store a model (or artificial neural network, 231 a) being learned or learned through the learning processor 240.

The learning processor 240 can use learning data to learn the artificial neural network 231 a. The learning model can be used while being installed in the AI server 200 of the artificial neural network, or can be used while being installed in an external device such as an AI device 100.

The learning model can be implemented by hardware, software, or a combination of hardware and software. If part or all of the learning model is implemented by software, one or more instructions constituting the learning model can be stored in the memory 230.

The processor 260 can infer a result value for new input data using the learning model, and generate a response or control command based on the inferred result value.

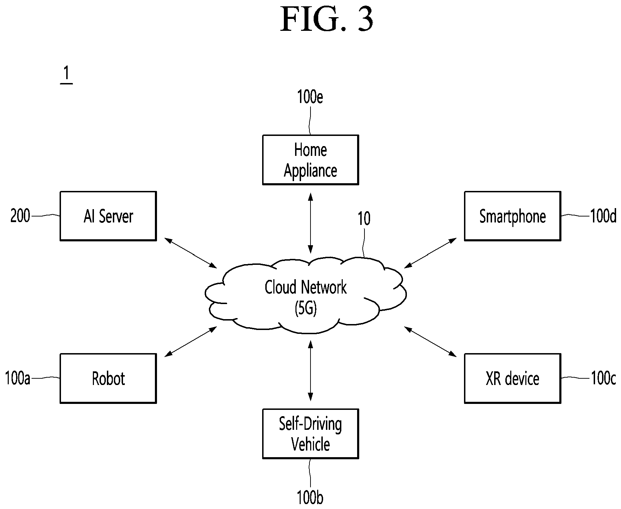

FIG. 3 illustrates an AI system 1 according to an embodiment of the present invention.

Referring to FIG. 3, the AI system 1 is connected to at least one of an AI server 200, a robot 100a, an autonomous vehicle 100b, an XR device 100c, a smartphone 100d, or an appliance 100e with a cloud network 10. Here, the robot 100a, the autonomous vehicle 100b, the XR device 100c, the smartphone 100d, or the appliance 100e to which AI technology is applied can be referred to as an AI device 100a to 100e.

The cloud network 10 can mean a network that constitutes part of a cloud computing infrastructure or exists within a cloud computing infrastructure. Here, the cloud network 10 can be configured using a 3G network, a 4G or LTE network, a 5G network, or the like.

That is, each device 100a to 100e, 200 constituting the AI system 1 can be connected to each other through the cloud network 10. In particular, each device 100a to 100e, 200 can communicate with each other through the base station, but can also communicate with each other directly without going through the base station.

The AI server 200 can include a server that performs AI processing and a server that performs calculations on big data.

The AI server 200 is connected to at least one or more of the AI devices constituting the AI system 1, such as a robot 100a, an autonomous vehicle 100b, an XR device 100c, a smartphone 100d, or a home appliance 100e, through the cloud network 10, and can assist at least a part of the AI processing of the connected AI devices 100a to 100e.

At this time, the AI server 200 can train an artificial neural network according to a machine learning algorithm on behalf of the AI device 100a to 100e, and can directly store the learning model or transmit it to the AI device 100a to 100e.

At this time, the AI server 200 can receive input data from the AI device 100a to 100e, infer a result value for the received input data using the learning model, and generate a response or control command based on the inferred result value and transmit it to the AI device 100a to 100e.

Alternatively, the AI device 100a to 100e can directly infer a result value for the input data using the learning model, and generate a response or control command based on the inferred result value.

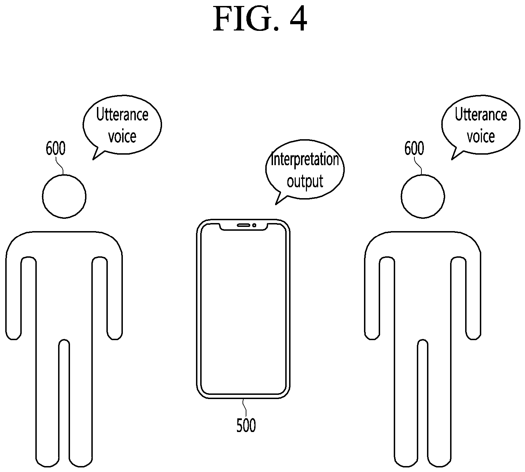

FIGS. 4 to 6 are diagrams for explaining an on-device AI system according to an embodiment of the present disclosure.

As illustrated in FIG. 4, the on-device AI system of the present disclosure can include an on-device AI device 500 that performs AI interpretation processing to interpret utterance voices of multiple speakers 600 into a target language.

Here, the on-device AI device 500 is an artificial intelligence device capable of performing on-device AI processing, and can include both a standing device such as a personal computer (PC), a network TV, a hybrid broadcast broadband TV (HBBTV), a smart TV, an Internet protocol TV (IPTV), and the like, and a mobile device (or handheld device) such as a smart phone, a tablet PC, a notebook, a PDA, a smart watch, smart glasses, a robot, and the like.

When utterance voices are input from multiple speakers 600, the on-device AI device 500 preprocesses the utterance voices, classifies the preprocessed utterance voices by speaker, and when a specific speaker is selected from the multiple speakers 600, extracts the utterance voice of the selected specific speaker from the utterance voices classified by speaker, and interprets and outputs the utterance voice of the specific speaker into a target language.

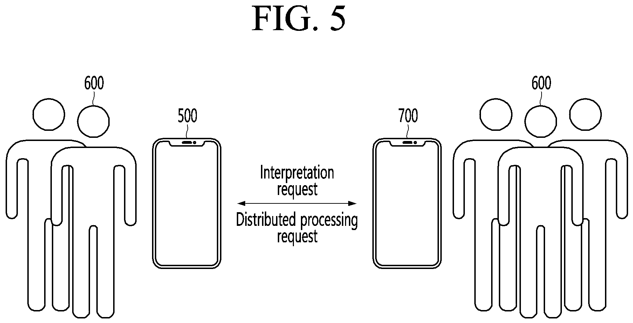

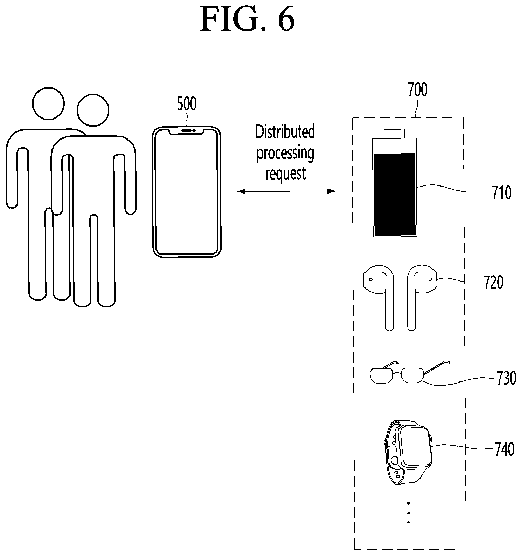

In some cases, as shown in FIGS. 5 and 6, the on-device AI system of the present disclosure can include an on-device AI device 500 that performs AI interpretation processing to interpret the utterance voices of multiple speakers 600 into a target language, and at least one AI interpretation processing device 700 that performs AI interpretation processing in response to an interpretation agency service request or a distributed processing request of the on-device AI device 500.

Here, the AI interpretation processing device 700 can be the same device as the on-device AI device 500 or can be a different device.

For example, as shown in FIG. 5, the AI interpretation processing device 700 can include at least one of a standing device including a PC, a Network TV, an HBBTV, a Smart TV, an IPTV, etc., which performs interpretation processing based on a pre-learned AI model and outputs the interpretation processing performance result, and a mobile device (handheld device) including a smart phone, a tablet PC, a lap-top, a PDA, a robot, etc.

As another example, as shown in FIG. 6, the AI interpretation processing device 700 can include a battery pack 710, earphones 720, smart glasses 730, smart watch 740, etc., which store at least one AI model and perform interpretation processing only based on the pre-learned AI model and do not output the interpretation processing performance result, and can additionally include various peripheral devices such as an external memory, a smart health band, an adapter, a Global Positioning System (GPS), a PDA, a barcode reader, a character recognition device, a voice recognition device, etc.

Here, the AI interpretation processing device 700 can be connected to the on-device AI device 500 in a wired and wireless manner.

As an example, when a user command requesting an interpretation agency service is input, the on-device AI device 500 requests an interpretation agency service for an utterance voice of a specific speaker to the AI interpretation processing device 700, and when the AI interpretation processing device 700 receives an approval for the interpretation agency service request, the AI interpretation processing device 700 can transmit the utterance voice data of the specific speaker and the target language information to be interpreted to the AI interpretation processing device 700 so that the AI interpretation processing device 700 interprets the utterance voice of the specific speaker into a target language and outputs it.

Here, when a user command requesting an interpretation agency service is input, the on-device AI device 500 can check whether the interpretation of the utterance voice of the specific speaker is currently being performed, and if the interpretation of the utterance voice of the specific speaker is currently being performed, the interpretation of the utterance voice of the specific speaker can be stopped, and the utterance voice data of the specific speaker that is input after the point in time when the interpretation is stopped can be obtained.

Then, when receiving an interpretation agency service request from the on-device AI device 500, AI interpretation processing device 700 measures the amount of the AI interpretation processing corresponding to the interpretation agency service request to determine whether self-interpretation processing is possible, and if it determines that self-interpretation processing is possible, AI interpretation processing device 700 transmits an approval for the interpretation agency service request to the on-device AI device 500, and when it receives the speaker's 600 utterance voice data and target language information to be interpreted from the on-device AI device 500, AI interpretation processing device 700 can interpret the utterance voice of the speaker 600 into the target language and output it.

As another embodiment, when a user command requesting the suspension of interpretation for some speakers corresponding to the interpretation agency service is input, the on-device AI device 500 can request the AI interpretation processing device 700 to suspend the interpretation agency service for some speakers, and receive information on the completion of the suspension of the interpretation agency service for some speakers and information on the continuation of the interpretation agency service for the remaining speakers from the AI interpretation processing device 700.

Here, when the AI interpretation processing device 700 receives a request to suspend the interpretation agency service for some speakers from the on-device AI device 500, the AI interpretation processing device 700 can suspend the interpretation agency service for some speakers and transmit information on the completion of the suspension of the interpretation agency service for some speakers and information on the continuation of the interpretation agency service for the remaining speakers to the on-device AI device 500.

As another embodiment, the on-device AI device 500 can measure the amount of AI interpretation processing for converting the utterance voice of the speaker into text to interpret the current language into the target language, and if the measured amount of Al interpretation processing exceeds the amount that can be self-processed, request distributed processing of AI interpretation processing to the AI interpretation processing device 700, and if a first AI interpretation processing result value is received from the AI interpretation processing device 700, the final interpretation result value can be provided based on the first AI interpretation processing result value and a self-processed second AI interpretation processing result value.

Here, the AI interpretation processing device 700, upon receiving a distributed processing request from the on-device AI device 500, extracts distributed processing information from the distributed processing request, performs AI interpretation processing based on the distributed processing information to generate an AI interpretation processing result value, and provides the generated AI interpretation processing result value to the on-device AI device 500.

At this time, the AI interpretation processing device 700 can extract distributed processing information including AI model information, location information, distributed processing amount information, and input data corresponding to the distributed processing portion from the distributed processing request.

In this way, if the on-device AI device 500 is a device that performs interpretation processing based on an AI model that the AI interpretation processing device 700 has learned in advance and outputs the interpretation processing execution result, as shown in FIG. 5, the on-device AI device 500 can request an interpretation agency service to the AI interpretation processing device 700 or can request distributed processing of Al interpretation processing to the AI interpretation processing device 700.

In addition, if the on-device AI device 500 is a device that performs only interpretation processing based on an AI model that the AI interpretation processing device 700 has learned in advance and does not output the interpretation processing execution result, as shown in FIG. 6, the on-device AI device 500 can request distributed processing of AI interpretation processing to the AI interpretation processing device 700.

Meanwhile, the on-device AI device 500 stores at least one AI model and can provide various service results through a pre-learned AI model corresponding to the speaker's 600 command.

Here, the Al model can be a deep neural network (DNN) that includes multiple hidden layers in addition to an input layer and an output layer.

The AI model can identify latent structures of data such as photos, text, videos, voices, and music.

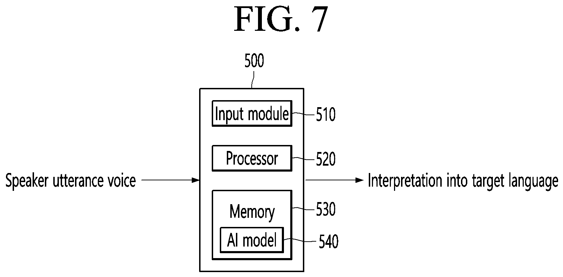

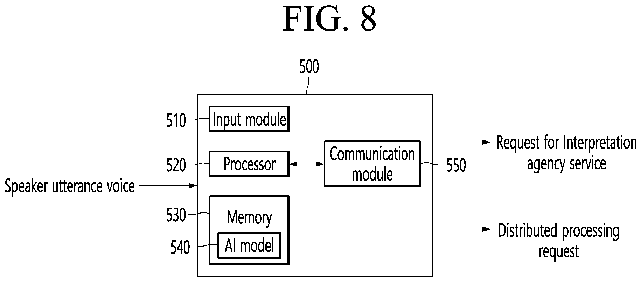

FIG. 7 and FIG. 8 are diagrams for explaining an on-device AI device according to an embodiment of the present disclosure.

As illustrated in FIG. 7, the on-device AI device 500 of the present disclosure can include an input module 510 into which an utterance voice of a speaker is input, a processor 520 that performs AI processing to interpret the utterance voice of the speaker into a target language, and a memory 530 in which at least one AI model 540 is stored.

The processor 520 of the present disclosure can perform interpretation processing based on a pre-learned AI model.

The processor 520 can preprocess the utterance voices when utterance voices are input from multiple speakers, classify the preprocessed utterance voices by speaker, extract the utterance voices of the selected specific speaker from the utterance voices classified by speaker when a specific speaker is selected from the multiple speakers, and interpret and output the utterance voices of the specific speaker into a target language.

When preprocessing the utterance voices, the processor 520 can perform preprocessing by analyzing the frequencies corresponding to the utterance voices when the utterance voices of the speakers are input and removing noise frequencies.

Here, when analyzing the frequencies corresponding to the utterance voices, the processor 520 can check whether there is a specific frequency that is outside the human voice frequency range within the frequencies corresponding to the utterance voices, and if there is a specific frequency, recognize the specific frequency as a noise frequency.

In some cases, the processor 520 can input the utterance voices of the speakers into a pre-learned noise classification model to classify and remove noise frequencies.

In addition, when the processor 520 classifies the preprocessed utterance voices by speaker, it can extract the voice features of the preprocessed utterance voices, identify the speakers for the preprocessed utterance voices based on the extracted voice features, and classify the preprocessed utterance voices by the identified speakers.

Here, the processor 520 can input the preprocessed utterance voices into a pre-learned feature extraction model to extract the voice features of the preprocessed utterance voices, and input the extracted voice features into a pre-learned speaker recognition model to identify the speakers for the preprocessed utterance voices.

In some cases, the processor 520 can select a speaker whose voice is most similar to the voice of a pre-registered speaker voice list based on the extracted voice features when the voice features of the pre-processed spoken voice are extracted, and can match the pre-processed utterance voice to the selected speaker to distinguish between speakers.

In addition, when extracting the voice features of the pre-processed utterance voice, the processor 520 can check whether the pre-processed utterance voice is a mixed voice in which the utterance voices of multiple speakers are mixed, and if the utterance voice is a mixed voice, perform speaker separation on the mixed voice to separate the mixed voice into individual voices, and extract voice features for each separated individual voice.

In some cases, when extracting voice features of preprocessed utterance voice, the processor 520 can check whether the preprocessed utterance voice is a continuous voice of utterance voices of multiple speakers, and if the utterance voice is a continuous voice, perform speaker diarization on the continuous voice to separate the continuous voice into speaker unit voices, group the separated speaker unit voices by speaker, and extract voice features for each speaker unit voice grouped by speaker.

Next, when selecting a specific speaker, the processor 520 can generate and provide a speaker list corresponding to the utterance voice if the utterance voice is separated by speaker, and when a user input for selecting at least one speaker included in the speaker list is received, the speaker selected by the user input can be selected as the specific speaker.

Then, when selecting a specific speaker, the processor 520 analyzes the amount of utterance voice data for each speaker for a predetermined period of time if the utterance voice is divided by speaker, and selects a specific speaker among multiple speakers based on the amount of utterance voice data for each speaker.

Here, the processor 520 compares the amount of utterance voice data for each speaker with a preset standard data amount, and selects a speaker having an utterance voice data amount greater than or equal to the standard data amount as a specific speaker.

In addition, if there are multiple speakers having an utterance voice data amount greater than or equal to the standard data amount, the processor 520 can select a speaker having the largest amount of utterance voice data as a specific speaker.

Here, the processor 520 checks whether the standard number of speakers for a specific speaker is preset if there are multiple speakers having utterance voice data that is greater than or equal to the standard data amount, and if the standard number of speakers for a specific speaker is preset, if the number of speakers having utterance voice data that is greater than or equal to the standard number of speakers is greater than or equal to the standard number of speakers, the processor selects specific speakers in the order of the largest amount of utterance voice data, and if the number of speakers having utterance voice data that is greater than or equal to the standard number of speakers is less than the standard number of speakers, the processor can select specific speakers in the order of the number of speakers having utterance voice data that is greater than or equal to the standard data amount.

At this time, when presetting the standard number of speakers, the processor 520 can preset the standard number of speakers based on the interpretation processing amount for the speakers' utterance voices.

In some cases, when selecting a specific speaker, the processor 520 can convert the speaker's utterance voice for a predetermined period of time into text if the utterance voice is classified by speaker, analyze the converted text to extract common associated keywords by speaker, and select a specific speaker among multiple speakers based on the common associated keywords by speaker.

Here, when extracting common associated keywords, the processor 520 can extract common associated keywords including the conference topic keyword and its associated keywords from the text corresponding to the speaker's utterance voice, and group the extracted common associated keywords by speaker.

In addition, the processor 520 can compare the number of common associated keywords by speaker with the preset standard keyword number and select a speaker having a common associated keyword number greater than the standard keyword number as a specific speaker.

Here, the processor 520 can select a speaker with the largest number of common associated keywords as a specific speaker if there are multiple speakers with a common associated keyword quantity greater than or equal to the standard keyword quantity.

In addition, if there are multiple speakers with a common associated keyword quantity greater than or equal to the standard keyword quantity, the processor 520 can check whether a standard number of speakers for a specific speaker has been preset, and if the standard number of speakers for a specific speaker has been preset, if the number of speakers with a common associated keyword quantity greater than or equal to the standard number of speakers is greater than or equal to the standard number of speakers, select specific speakers in the order of the largest number of common associated keywords, and if the number of speakers with a common associated keyword quantity greater than or equal to the standard number of speakers is less than or equal to the standard number of speakers, select specific speakers in the order of the number of speakers with a common associated keyword quantity greater than or equal to the standard keyword quantity.

Here, when presetting the standard number of speakers, the processor 520 can preset the standard number of speakers based on the interpretation processing capacity for the utterance voice of the speaker.

Next, when extracting the utterance voice of a specific speaker, the processor 520 can, when the specific speaker is selected from among multiple speakers, leave only the utterance voice of the selected specific speaker among the utterance voices classified by speaker, and remove the utterance voices of the remaining speakers except for the specific speaker.

Here, when removing the utterance voices of the remaining speakers, the processor 520 can leave only the utterance voices of other speakers that are consecutive before or after the utterance voice time of the specific speaker, and remove the utterance voices of the remaining speakers.

In addition, the processor 520 can store only the utterance voices of other speakers that are consecutive before or after the utterance voice time of the specific speaker in the database in order to extract reference inference keywords when interpreting the utterance voice of a specific speaker.

Then, the processor 520, when interpreting the utterance voice of a specific speaker, converts the utterance voice of the specific speaker into text to check the current language, and when the target language is set, measures the amount of AI interpretation processing for interpreting the current language into the target language to determine whether self-interpretation processing is possible, and when self-interpretation processing is determined to be possible, the processor 520 can interpret the utterance voice of the specific speaker into the target language by self-processing the AI interpretation processing.

Here, when setting the target language, the processor 520 checks whether the target language to be interpreted is set if the current language is confirmed, and if the target language is not set, generates and provides a target language list window, and if a user input for selecting a specific language is received through the target language list window, the selected specific language can be set as the target language.

In some cases, the processor 520 can generate and provide a user notification requesting the setting of the target language if the target language is not set.

For example, the processor 520 can generate and output a user notification in at least one of a text form and a sound form.

In addition, when determining whether interpretation processing is possible, the processor 520 can measure the amount of AI interpretation processing for interpreting the current language into the target language, and if the measured amount of AI interpretation processing is less than or equal to the self-processing capacity (or amount), the processor can determine that self-interpretation processing is possible.

In some cases, the processor 520 can determine that self-interpretation processing is not possible if the measured amount of AI interpretation processing exceeds the self-processing capacity, select an AI interpretation processing device for distributed processing of AI interpretation processing, request distributed processing of AI interpretation processing to the selected AI interpretation processing device, and when the firstAl interpretation processing result value is received from the AI interpretation processing device, the processor can provide a final interpretation result value based on the first AI interpretation processing result value and the self-processed second AI interpretation processing result value.

Here, when selecting an AI interpretation processing device for distributed processing of AI interpretation processing, the processor 520 checks whether there is a communication connection with an external device, and if the external device is connected, obtains identification information of the external device from the external device, and checks whether the external device is an AI interpretation processing device based on the identification information, and if the external device is an AI interpretation processing device, selects the external device as an AI interpretation processing device for distributed processing of AI interpretation processing.

As illustrated in FIG. 8, the present disclosure can further include a communication module 550 that is wired or wirelessly connected to an external device, and the processor 520 can check whether there is a communication connection with the external device through the communication module 550.

When checking whether the external device is an AI interpretation processing device, the processor 520 can recognize the external device as an AI interpretation processing device if the external device stores an AI model for interpretation processing.

For example, the AI interpretation processing device can include at least one of a standing device including a PC, a Network TV, an HBBTV, a Smart TV, and an IPTV that performs interpretation processing based on an AI model and outputs the interpretation processing results, and a mobile device or handheld device including a Smart Phone, a Tablet PC, a Notebook, a PDA, and a robot.

For another example, the AI interpretation processing device can include at least one of a battery pack, an earphone, an external memory, a smart watch, smart glasses, a smart health band, an adapter, a GPS, a PDA, a barcode reader, a character recognition device, and a voice recognition device that performs only interpretation processing based on an AI model and does not output the interpretation processing results.

When selecting an AI interpretation processing device, the processor 520 can select all of the external devices recognized as AI interpretation processing devices as AI interpretation processing devices if there are multiple external devices, and can assign priorities to the multiple external devices based on processing performance indices of the multiple external devices selected as AI interpretation processing devices.

Here, the processor 520 can assign the highest priority to the external device with the highest processing performance indices among the multiple external devices, and can assign the lowest priority to the external device with the lowest processing performance indices.

Therefore, as shown in FIG. 8, the processor 520 can check the processing capacities of the external devices for the excess amount if the measured AI interpretation processing amount exceeds its own processing capacity, and if multiple external devices are required for the excess amount, can request distributed processing of AI interpretation processing for the excess amount to the external devices according to the priorities assigned to them.

Here, when requesting AI interpretation processing for the excess amount in a distributed manner, the processor 520 can request processing of different excess amounts to multiple external devices.

That is, when requesting processing of different excess amounts, the processor 520 can request the processing of the first excess amount to an external device with a high priority, and can request the processing of the second excess amount, which is the remainder of the total excess amount excluding the first excess amount, to an external device with a low priority.

In some cases, when requesting AI interpretation processing for the excess amount in a distributed manner, the processor 520 can request the processing of the same excess amount to multiple external devices.

Here, the processor 520 can equally distribute the total excess amount to multiple external devices, request the processing of the first excess amount to an external device with a high priority, and request the processing of the second excess amount, which is the same as the first excess amount, to an external device with a low priority.

In addition, when requesting distributed processing of AI interpretation processing, the processor 520 calculates an excess amount other than the self-processing capacity among the measured AI interpretation processing amount, checks the processing capacity of the selected AI interpretation processing device, and if the processing capacity of the AI interpretation processing device is greater than the excess amount, the processor 520 can request distributed processing of AI interpretation processing for the excess amount to the AI interpretation processing device.

Here, if the processing capacity of the AI interpretation processing device is less than the excess amount, the processor 520 can additionally select another AI interpretation processing device and request distributed processing of AI interpretation processing for the excess amount to multiple AI interpretation processing devices.

In addition, when requesting distributed processing of AI interpretation processing, the processor 520 can calculate an excess amount other than the self-processing capacity among the measured amount of the AI interpretation processing, extract a distributed processing portion corresponding to the excess amount among the AI interpretation processing, and request distributed processing of AI interpretation processing for the extracted distributed processing portion to the selected AI interpretation processing device.

Here, when extracting a distributed processing portion corresponding to an excess amount, the processor 520 can analyze an AI model for interpretation processing to check whether there is a branch point connecting one upper operator to multiple lower operators and a junction point joining multiple upper operators to one lower operator, and if there is a branch point and a junction point, it checks whether there is at least one parallel processing portion based on the branch point and the junction point, and can extract the parallel processing portion as a distributed processing portion.

In some cases, when extracting a distributed processing portion corresponding to an excess amount, if there are multiple AI models for interpretation processing, the processor 520 can check whether there are AI models among the multiple AI models that can be processed in parallel, and if there are AI models that can be processed in parallel, it can extract the processing portion performed by the parallel processing AI model as a distributed processing portion.

Here, when requesting distributed processing of AI interpretation processing, the processor 520 can provide a distributed processing request including AI model information, location information, distributed processing amount information, and input data corresponding to the distributed processing portion to the AI interpretation processing device.

In addition, when providing the final interpretation result value, the processor 520 can map the first AI interpretation processing result value received from the AI interpretation processing device and the self-processed second AI interpretation processing result value to provide the final interpretation result value that interprets the utterance voice of a specific speaker into a target language.

In addition, when interpreting and outputting the utterance voice of a specific speaker, the processor 520 can output the interpretation result in at least one of the first method of outputting the interpretation result as a voice through a speaker and the second method of outputting the interpretation result as a text through a display.

Meanwhile, as shown in FIG. 8, the present disclosure can further include a communication module 550 that is wired or wirelessly connected to an AI interpretation processing device that performs interpretation processing based on an AI model, wherein the processor 520 checks whether a communication connection is established with the AI interpretation processing device when a user command requesting an interpretation agency service is input, and when the communication connection is established with the AI interpretation processing device, requests the AI interpretation processing device to provide an interpretation agency service for utterance voice of a specific speaker, and when an approval for the interpretation agency service request is received from the AI interpretation processing device, the AI interpretation processing device can transmit the utterance voice data of the specific speaker and information on the target language to be interpreted to the AI interpretation processing device so that the AI interpretation processing device interprets the utterance voice data of the specific speaker into a target language and outputs it.

Here, when a user command requesting an interpretation agency service is input, the processor 520 checks whether interpretation of utterance voice of a specific speaker is currently being performed, and if interpretation of the utterance voice of the specific speaker is currently being performed, the processor stops interpretation of the utterance voice of the specific speaker, and can obtain utterance voice data of the specific speaker that is input after the interpretation is stopped.

As an example, when a user command requesting the interruption of interpretation of some speakers corresponding to the interpretation agency service is input, the processor 520 can request the AI interpretation processing device to interrupt interpretation agency service for some speakers, and receive from the AI interpretation processing device information on the completion of the interruption of interpretation agency service for some speakers and information on the continuation of interpretation agency service for the remaining speakers.

In another case, when the processor 520 receives a distributed processing request from an AI interpretation processing device, it can extract distributed processing information from the distributed processing request, perform AI interpretation processing based on the distributed processing information to generate an AI interpretation processing result value, and provide the generated AI interpretation processing result value to the AI interpretation processing device.

Here, when extracting the distributed processing information, the processor 520 can extract distributed processing information including AI model information, location information, distributed processing amount information, and input data corresponding to the distributed processing portion from the distributed processing request.

In another case, when the processor 520 receives an interpretation agency service request from an AI interpretation processing device, it measures the AI interpretation processing amount corresponding to the interpretation agency service request to determine whether self-interpretation processing is possible, and if it determines that self-interpretation processing is possible, it transmits an approval for the interpretation agency service request to the AI interpretation processing device, and when it receives the utterance voice data of the speaker and target language information to be interpreted from the AI interpretation processing device, it can interpret the utterance voice of the speaker into the target language and output it.

Here, the processor 520 can, when receiving a request to suspend interpretation agency service for some speakers from the AI interpretation processing device, suspend interpretation agency service for some speakers and transmit to the AI interpretation processing device, along with the information on the completion of suspending interpretation agency service for some speakers and the information on the continuation of interpretation agency service for the remaining speakers.

In this way, the on-device AI device of the present disclosure extracts the utterance voice of a specific speaker from the utterance voices classified by speaker when a specific speaker is selected from among multiple speakers and interprets it into a target language, thereby identifying conversations between multiple speakers by speaker and accurately interpreting them in real time.

In addition, the present disclosure can improve the speed of AI interpretation processing and the accuracy and service quality of the interpretation processing results by selecting an AI interpretation processing device located externally and requesting distributed processing of AI interpretation processing when the amount of AI processing for interpreting the utterance voice of a speaker exceeds the self-processing capacity.

In addition, the present disclosure can minimize power consumption and improve performance and lifespan by distributing AI interpretation processing with AI interpretation processing autonomously located outside.

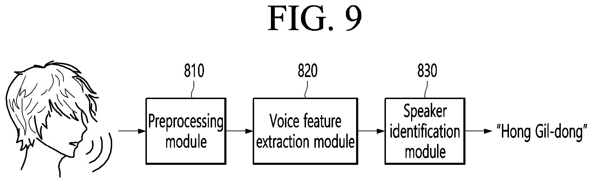

FIGS. 9 to 11 are diagrams for explaining a speaker identification process of an on-device AI device according to an embodiment of the present disclosure.

As illustrated in FIG. 9, the present disclosure can preprocess an utterance voice when an utterance voice is input from a speaker, and identify the preprocessed utterance voice by speaker.

The present disclosure can include a preprocessing module 810 that preprocesses an utterance voice, a voice feature extraction module 820 that extracts features of the preprocessed utterance voice, and a speaker identification module 830 that identifies a speaker for the utterance voice based on the voice features.

Here, the preprocessing module 810 can perform preprocessing by analyzing the frequency corresponding to the utterance voice when the speaker's utterance voice is input and removing the noise frequency.

For example, when analyzing the frequency corresponding to the utterance voice, the preprocessing module 810 can check whether there is a specific frequency that is outside the human voice frequency range within the frequency corresponding to the utterance voice, and if there is a specific frequency, it can recognize the specific frequency as a noise frequency.

In some cases, the preprocessing module 810 can input the speaker's utterance voice into a pre-learned noise classification model to classify and remove the noise frequency.

In addition, the voice feature extraction module 820 extracts the voice features of the preprocessed utterance voice, and the speaker identification module 830 can identify the speaker for the preprocessed utterance voice based on the extracted voice features and classify the preprocessed utterance voice by the identified speaker.

Here, the voice feature extraction module 820 inputs the preprocessed utterance voice into a pre-learned feature extraction model to extract the voice features of the preprocessed utterance voice, and the speaker identification module 830 inputs the extracted voice features into a pre-learned speaker recognition model to identify the speaker for the preprocessed utterance voice.

In some cases, the speaker identification module 830 can, when the voice features of the preprocessed utterance voice are extracted, select the speaker whose voice has the highest similarity among the pre-registered speaker voice list based on the extracted voice features, and match the preprocessed spoken voice to the selected speaker to distinguish each speaker.

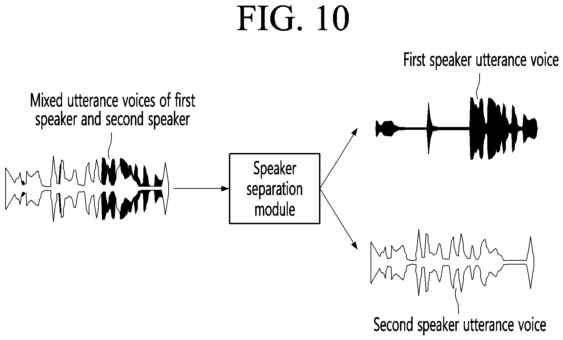

In addition, as illustrated in FIG. 10, the present disclosure can check whether the preprocessed utterance voice is a mixed speech in which the utterance voices of multiple speakers are mixed, and if the utterance voice is a mixed utterance, speaker separation is performed on the mixed utterance voice to separate the mixed utterance voice into individual voices, and voice features can be extracted for each separated individual voice.

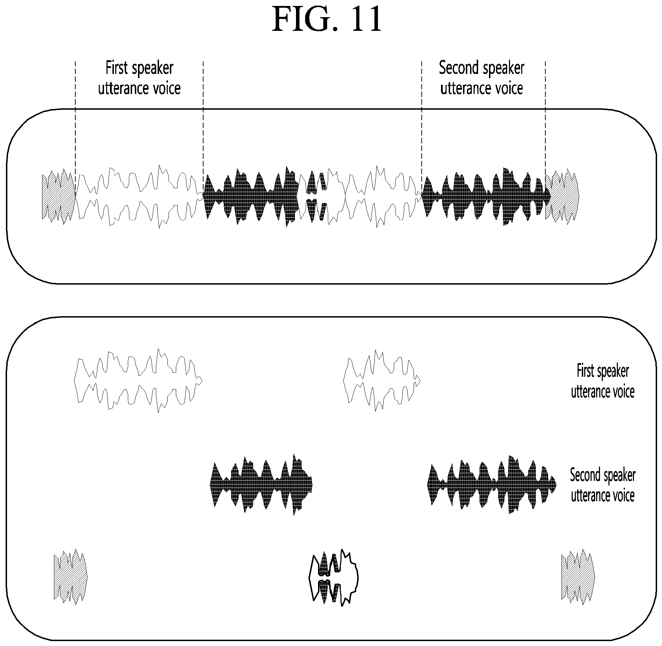

In some cases, as illustrated in FIG. 11, the present disclosure can check whether the preprocessed utterance voice is a continuous speech in which the utterance voices of multiple speakers are continuous, and if the utterance voice is a continuous speech, speaker diarization is performed on the continuous speech to separate the continuous speech into speaker unit voices, and the separated speaker unit voices can be grouped by speaker, and voice features can be extracted for each speaker unit voice grouped by speaker.

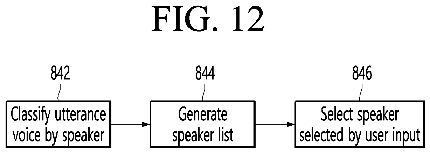

FIGS. 12 to 15 are diagrams for explaining a speaker selection process of an on-device AI device according to an embodiment of the present disclosure.

As shown in FIG. 12, the present disclosure can select a specific speaker by classifying the utterance voice by speaker 842, generating a speaker list corresponding to the utterance voice 844, and selecting a speaker selected by the user input as a specific speaker when a user input for selecting at least one speaker included in the speaker list is received 846.

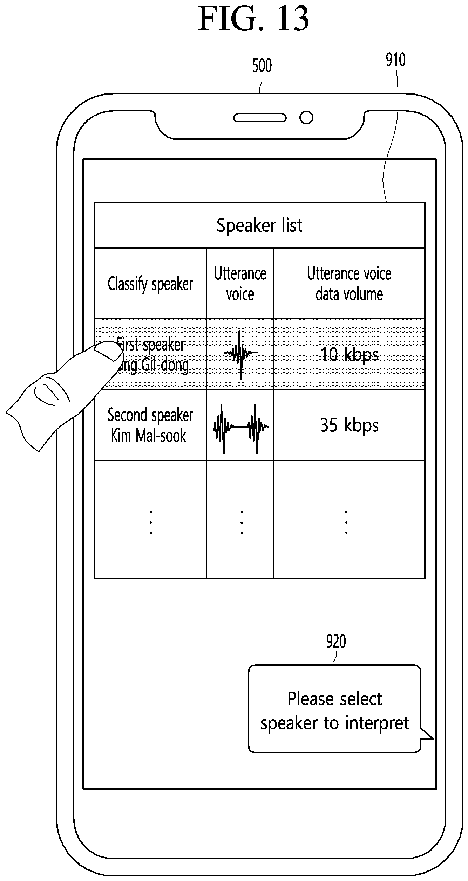

As shown in FIG. 13, the present disclosure can generate a speaker list window 910 and output it on the screen of the on-device AI device 500.

Here, the speaker list window 910 can include various items such as a speaker selection item, an utterance voice provision item for each speaker, and an utterance voice data amount for each speaker.

In addition, the present disclosure can provide a speaker selection request notification message 920 together with the speaker list window 910 when providing the speaker list window 910.

Here, the present disclosure can generate and output a speaker selection request notification message 920 in at least one of a text form and a sound form.

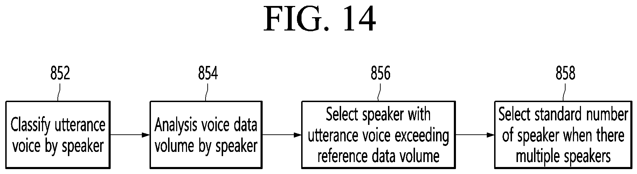

As illustrated in FIG. 14, the present disclosure can select a specific speaker by dividing the utterance voice by speaker 852, analyzing the amount of utterance voice data by speaker for a predetermined period of time 854, and selecting a specific speaker among a plurality of speakers based on the amount of utterance voice data by speaker 856, 858.

Here, the present disclosure can compare the amount of utterance voice data by speaker with a preset reference data amount and select a speaker having an utterance voice data amount greater than or equal to the reference data amount as a specific speaker 856.

In addition, the present disclosure can select a speaker having the largest amount of utterance voice data as a specific speaker if there are multiple speakers having an utterance voice data amount greater than or equal to the reference data amount.

Here, the present disclosure checks whether the standard number of speakers for a specific speaker is preset when there are multiple speakers having utterance voice data that is greater than or equal to the standard data amount, and if the standard number of speakers for a specific speaker is preset, if the number of speakers having utterance voice data that is greater than or equal to the standard number of speakers is greater than or equal to the standard number of speakers, then specific speakers are selected in the order of the largest amount of utterance voice data, and if the number of speakers having utterance voice data that is greater than or equal to the standard number of speakers is less than the standard number of speakers, then specific speakers can be selected in the order of the number of speakers having utterance voice data that is greater than or equal to the standard data amount 858.

At this time, the present disclosure can preset the standard number of speakers based on the interpretation processing capacity of the utterance voices of the speakers when presetting the standard number of speakers.

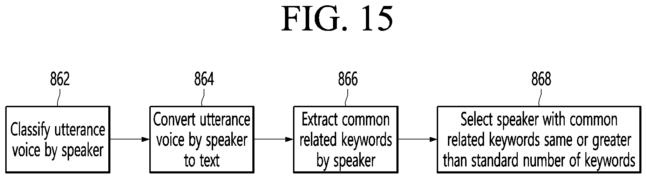

As shown in FIG. 15, the present disclosure, when selecting a specific speaker, classifies the utterance voice by speaker 862, converts the utterance voice by speaker for a predetermined period of time into text 864, analyzes the converted text to extract common associated keywords by speaker 866, and selects a specific speaker among a plurality of speakers based on the common associated keywords by speaker 868.

Here, the present disclosure, when extracting common associated keywords, extracts common associated keywords including a conference topic keyword and its associated keywords from a text corresponding to the utterance voice by speaker, and groups the extracted common associated keywords by speaker.

In addition, the present disclosure compares the number of common associated keywords by speaker with a preset reference keyword number, and selects a speaker having a number of common associated keywords greater than the reference keyword number as a specific speaker 868.

Here, the present disclosure can select a speaker with the largest number of common associated keywords as a specific speaker if there are multiple speakers with a common associated keyword quantity greater than or equal to the standard keyword quantity.

In addition, the present disclosure can select a speaker with the largest number of common associated keywords as a specific speaker if there are multiple speakers with a common associated keyword quantity greater than or equal to the standard keyword quantity. If the standard number of speakers for a specific speaker is set in advance, the present disclosure can select specific speakers in the order of the largest number of common associated keywords if the number of speakers with a common associated keyword quantity greater than or equal to the standard number of speakers is greater than or equal to the standard number of speakers. If the number of speakers with a common associated keyword quantity greater than or equal to the standard number of speakers is less than or equal to the standard number of speakers, the present disclosure can select specific speakers in the order of the number of speakers with a common associated keyword quantity greater than or equal to the standard keyword quantity.

Here, the present disclosure can set the standard number of speakers in advance based on the interpretation processing capacity of the speaker's utterance voice when setting the standard number of speakers in advance.

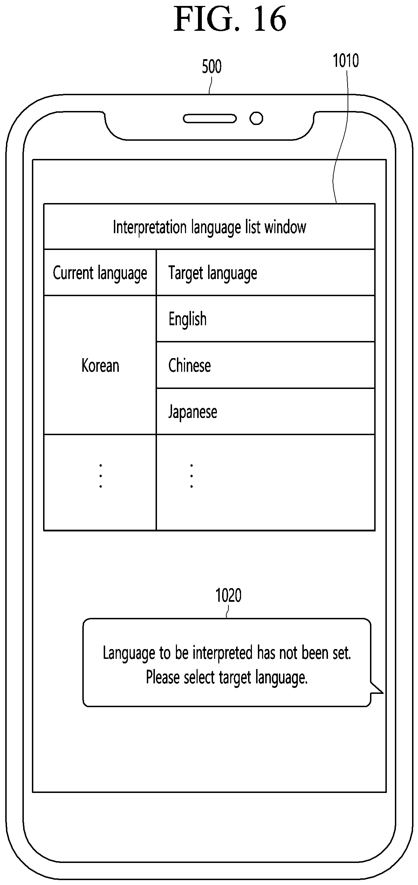

FIG. 16 is a drawing for explaining a process of setting a target language of an on-device AI device according to an embodiment of the present disclosure.

In the present disclosure, when interpreting a specific speaker's spoken voice, the specific speaker's spoken voice is converted into text, the current language is confirmed through the converted text, and if the current language is confirmed, whether a target language to be interpreted is set can be confirmed.

Here, as shown in FIG. 16, in the present disclosure, if the target language is not set, an interpretation language list window 1010 can be generated and output on the screen of the on-device AI device 500.

At this time, the interpretation language list window 1010 can include various items such as a current language item and a target language selection item.

In addition, the present disclosure can generate and provide a user notification 1020 requesting setting of a target language together with the interpretation language list window 1010 when providing the interpretation language list window 1010.

As an example, the present disclosure can generate and output the user notification 1020 in at least one of a text form and a sound form.

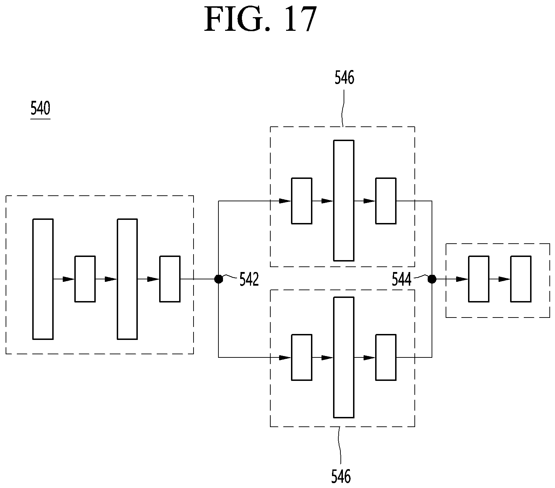

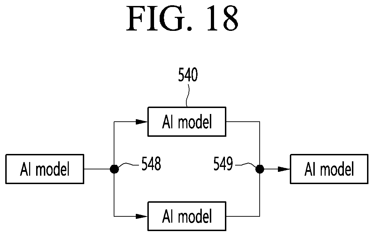

FIG. 17 and FIG. 18 are diagrams for explaining a process of measuring the amount of AI interpretation processing of an on-device AI device according to an embodiment of the present disclosure.

The present disclosure measures the amount of AI interpretation processing for interpreting a current language into a target language by converting utterance voice of a speaker into text, and if the measured amount of AI interpretation processing exceeds the self-processing capacity, requests distributed processing of AI interpretation processing to an AI interpretation processing device, and if a first AI interpretation processing result value is received from the AI interpretation processing device, a final interpretation result value can be provided based on the first AI interpretation processing result value and the second AI interpretation processing result value that has been processed by itself.

Here, the present disclosure can measure the amount of AI interpretation processing for performing interpretation based on the amount of computation of an AI model 540 for interpretation when measuring the amount of AI interpretation processing.

As illustrated in FIG. 17, the present disclosure can measure the amount of AI interpretation processing based on the amount of computation processed by one AI model 640 if there is one AI model 540 for interpretation.

That is, the present disclosure can analyze the AI model 540 to determine whether there is a branch point 542 connecting one upper operator to multiple lower operators and a junction point 544 joining multiple upper operators to one lower operator.

In addition, the present disclosure can determine whether there is at least one parallel processing part 546 based on the branch point 542 and the junction point 544 if there is a branch point 542 and a junction point 544, and if there is a parallel processing part 546, the AI interpretation processing amount can be measured based on the first computation amount for the parallel processing part 546 and the second computation amount for the remaining part other than the parallel processing part.

In addition, the present disclosure can determine whether to perform distributed processing for the parallel processing part 546 among the total AI interpretation processing amount for one AI model when the AI interpretation processing amount for performing interpretation exceeds the self-processing capacity.

As another example, as illustrated in FIG. 18, the present disclosure can measure the AI interpretation processing amount based on the total amount of computation processed by the plurality of AI models 540 if there are multiple AI models 540.

Here, the present disclosure analyzes the AI model group to determine whether there is a branch point 548 connecting one upperAl model to multiple lower AI models and a junction point 549 joining multiple upperAl models to one lower AI model, and if there is a branch point 548 and a junction point 549, it determines whether there is at least one parallel processing part based on the branch point 548 and the junction point 549, and if there is a parallel processing part, the amount of the AI interpretation processing can be measured based on the first computation amount for the parallel processing part and the second computation amount for the remaining part other than the parallel processing part.

In addition, the present disclosure can determine whether to perform distributed processing for a parallel processing portion of the entire AI interpretation processing amount for an AI model group including multiple AI models when the AI interpretation processing amount for performing interpretation exceeds its own processing capacity.

In addition, the present disclosure can determine whether there is a branch point connecting one upper operator to multiple lower operators and a junction point joining multiple upper operators to one lower operator for each AI model in the AI model group, and if there is a branch point and a junction point, it can determine whether there is at least one parallel processing portion based on the branch point and the junction point, and determine whether to perform distributed processing for the parallel processing portion.

In addition, the present disclosure can request distributed processing for the parallel processing portion between the branch point and the junction point within each AI model at a later time when requesting distributed processing for AI interpretation processing, and can also request distributed processing for the entire processing portion performed by the parallel model between the branch point and the junction point within the AI model group to the AI interpretation processing device.

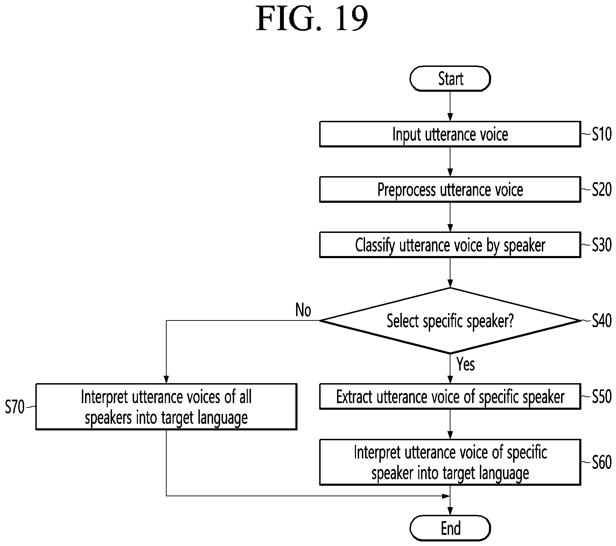

FIGS. 19 to 23 are diagrams for explaining a method for providing a multi-party interpretation service of an on-device AI device according to an embodiment of the present disclosure.

As illustrated in FIG. 19, the on-device AI device of the present disclosure can preprocess the utterance voices (S20) when the utterance voices of multiple speakers are input (S10).

Here, the present disclosure can perform preprocessing by analyzing the frequency corresponding to the utterance voices when the utterance voices of the speakers are input and removing the noise frequency.

In addition, the present disclosure can distinguish the preprocessed utterance voice s by speaker (S30).

Here, the present disclosure can extract the voice features of the preprocessed utterance voices, identify the speaker for the preprocessed utterance voices based on the extracted voice features, and distinguish the preprocessed utterance voices by the identified speakers.

Next, the present disclosure can check whether a specific speaker is selected among multiple speakers (S40).

Here, the present disclosure can generate and provide a speaker list corresponding to the utterance voice when the utterance voice is distinguished by speaker, and select the speaker selected by the user input as a specific speaker when a user input is received for selecting at least one speaker included in the speaker list.

In some cases, the present disclosure can convert the utterance voice of each speaker for a predetermined period of time into text when the utterance voice is distinguished by speaker, analyze the converted text to extract common associated keywords for each speaker, and select a specific speaker among multiple speakers based on the common associated keywords for each speaker.

In other cases, the present disclosure can convert the utterance voice of each speaker for a predetermined period of time into text when the utterance voice is distinguished by speaker, analyze the converted text to extract common associated keywords for each speaker, and select a specific speaker among multiple speakers based on the common associated keywords for each speaker.

Next, the present disclosure can extract the utterance voice of the selected specific speaker from among the utterance voices classified by the speaker when a specific speaker is selected from among the multiple speakers (S50).

Here, the present disclosure can remove the utterance voices of the remaining speakers except for the specific speaker by leaving only the utterance voice of the selected specific speaker from among the utterance voices classified by the speaker when a specific speaker is selected from among the multiple speakers.

And, the present disclosure can interpret the utterance voice of the specific speaker into a target language and output it when the utterance voice of the specific speaker is extracted (S60).

Here, the present disclosure converts the utterance voice of the specific speaker into text to check the current language, and when the target language is set, measures the amount of AI interpretation processing for interpreting the current language into the target language to determine whether self-interpretation processing is possible, and if self-interpretation processing is determined to be possible, AI interpretation processing can be self-processed to interpret the utterance voice of the specific speaker into the target language.

In addition, the present disclosure can output the speech of all speakers by interpreting them into the target language if a specific speaker is not selected among multiple speakers (S70).

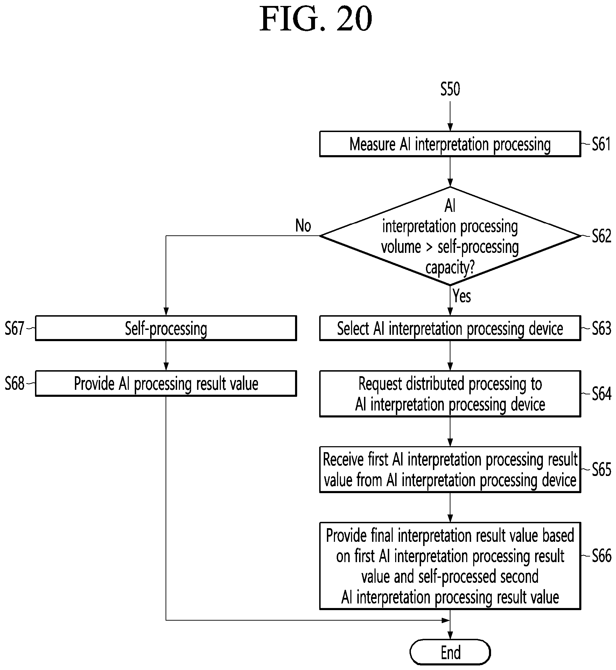

As illustrated in FIG. 20, the on-device AI device of the present disclosure can also perform a distributed processing request based on the AI interpretation processing amount for interpreting the current language into the target language.

As illustrated in FIG. 20, the present disclosure can convert the utterance voice of a specific speaker into text to confirm the current language, and if the target language is set, can measure the AI interpretation processing amount for interpreting the current language into the target language (S61).

In addition, the present disclosure can confirm whether the measured AI interpretation processing amount exceeds the self-processing capacity (S62).

Next, the present disclosure can select an AI interpretation processing device for distributed processing of AI interpretation processing by determining that self-interpreting is impossible if the measured AI interpretation processing amount exceeds the self-processing capacity (S63).

Here, the present disclosure checks whether there is a communication connection with an external device, and if the external device is connected to the communication, obtains identification information of the external device from the external device, and checks whether the external device is an AI interpretation processing device based on the identification information, and if the external device is an AI interpretation processing device, the external device can be selected as an AI interpretation processing device for distributed processing of the AI interpretation processing.

Next, the present disclosure can request distributed processing of AI interpretation processing to the selected AI interpretation processing device (S64).

Here, the present disclosure calculates an excess amount of the measured AI interpretation processing amount other than the self-processable capacity, checks the processable amount of the selected AI interpretation processing device, and if the processable amount of the AI interpretation processing device is greater than the excess amount, can request distributed processing of AI interpretation processing for the excess amount to the AI interpretation processing device.

At this time, the present disclosure can additionally select another AI interpretation processing device if the processing capacity of the AI interpretation processing device is less than the excess amount, and request AI interpretation processing for the excess amount to be distributed to multiple AI interpretation processing devices.

In addition, the present disclosure can calculate the excess amount in addition to the self-processing capacity among the measured AI interpretation processing amounts, extract a distributed processing portion corresponding to the excess amount among the AI interpretation processing, and request AI interpretation processing for the extracted distributed processing portion to the selected AI interpretation processing device.

In addition, the present disclosure can receive the first AI interpretation processing result value from the AI interpretation processing device (S65).

Next, the present disclosure can provide the final interpretation result value based on the first AI interpretation processing result value and the self-processed second AI interpretation processing result value (S66).

Here, the present disclosure can provide a final interpretation result value that interprets an utterance voice of a specific speaker into a target language by mapping the first AI interpretation processing result value received from the AI interpretation processing device and the self-processed second AI interpretation processing result value.

In addition, the present disclosure can output the interpretation result in at least one of the first method of outputting the interpretation result as a voice through a speaker and the second method of outputting the interpretation result as a text through a display when interpreting and outputting the utterance voice of the specific speaker.

Meanwhile, the present disclosure can determine whether self-interpretation processing is possible if the measured amount of the AI interpretation processing is less than the self-processing capacity (S67), and can provide the AI interpretation processing result value by processing the AI interpretation processing by itself if it is determined that self-interpretation processing is possible (S68).

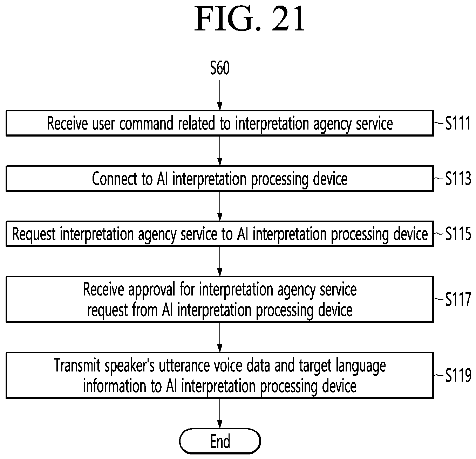

As illustrated in FIG. 21, the on-device AI device of the present disclosure can receive a user command requesting an interpretation agency service (S111).

Next, the present disclosure can check whether a communication connection is established with an AI interpretation processing device when a user command requesting an interpretation agency service is input (S113).

Here, the present disclosure can check whether an interpretation of an utterance voice of a specific speaker is currently being performed when a user command requesting an interpretation agency service is input, and if an interpretation of utterance voice of a specific speaker is currently being performed, the interpretation of the utterance voice of the specific speaker is stopped, and the utterance voice data of the specific speaker that is input after the interpretation is stopped can be obtained.

Next, the present disclosure can request an interpretation agency service of an utterance voice of a specific speaker to the AI interpretation processing device when a communication connection is established with the Al interpretation processing device (S115).

In addition, the present disclosure can receive an approval for an interpretation agency service request from the AI interpretation processing device (S117).

Then, the present disclosure can transmit the utterance voice data of a specific speaker and the target language information to be interpreted to the AI interpretation processing device so that the AI interpretation processing device interprets the utterance voice data of a specific speaker into a target language and outputs it (S119) when receiving the approval for a request for an interpretation agency service from the AI interpretation processing device.

In addition, the present disclosure can request the AI interpretation processing device to suspend the interpretation agency service for some speakers when a user command requesting the suspension of interpretation for some speakers corresponding to the interpretation agency service is input, and can receive from the AI interpretation processing device the information on the completion of the suspension of the interpretation agency service for some speakers and the information on the continuation of the interpretation agency service for the remaining speakers.

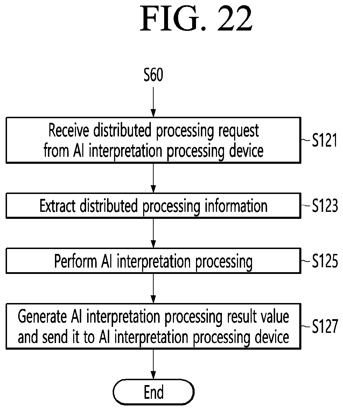

As illustrated in FIG. 22, the on-device AI device of the present disclosure can receive a distributed processing request from the Al interpretation processing device (S121).

And, the present disclosure can extract distributed processing information from the distributed processing request when receiving a distributed processing request from an AI interpretation processing device (S123).

Here, the present disclosure can extract distributed processing information including AI model information, location information, distributed processing amount information, and input data corresponding to the distributed processing portion from the distributed processing request (S125).

Next, the present disclosure can perform AI interpretation processing based on the distributed processing information to generate an AI interpretation processing result value, and provide the generated AI interpretation processing result value to the AI interpretation processing device (S127).

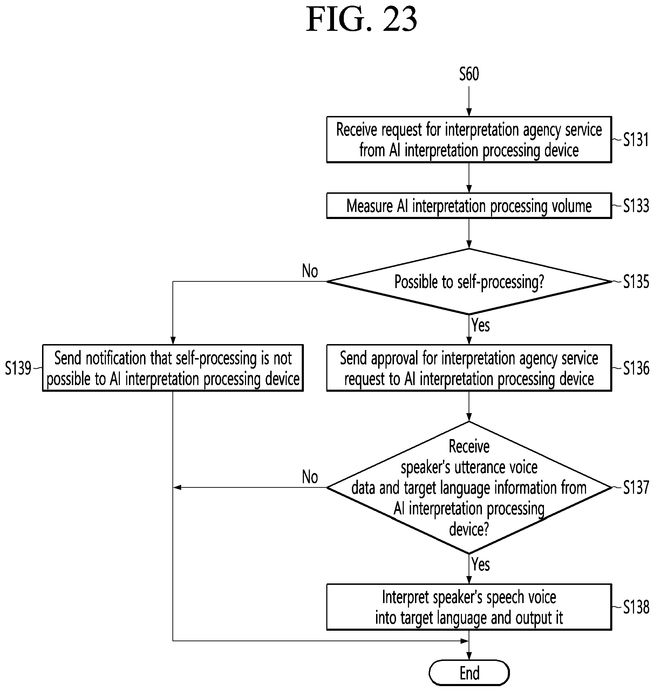

As illustrated in FIG. 23, the on-device AI device of the present disclosure can receive an interpretation agency service request from the Al interpretation processing device (S131).

And, the present disclosure can measure an amount of an AI interpretation processing corresponding to the interpretation agency service request when receiving an interpretation agency service request from the AI interpretation processing device (S133).

Next, the present disclosure can determine whether self-interpretation processing is possible based on the measured amount of the AI interpretation processing (S135).

Next, if the present disclosure determines that self-interpretation processing is possible, the present disclosure can transmit an approval for the interpretation agency service request to the Al interpretation processing device (S136).

If the present disclosure determines that self-interpretation processing is impossible, the present disclosure can transmit a notification message notifying that self-processing of the interpretation agency service is impossible to the Al interpretation processing device (S139).

Then, the present disclosure can confirm whether the utterance voice data of the speaker and target language information to be interpreted are received from the AI interpretation processing device (S137).

Next, if the present disclosure receives the utterance voice data of the speaker and target language information to be interpreted from the AI interpretation processing device, the utterance voice of the speaker can be interpreted into the target language and output (S138).

Here, the present disclosure can, when receiving a request for suspending interpretation agency services for some speakers from an AI interpretation processing device, suspend interpretation agency services for some speakers and transmit, to the AI interpretation processing device, information on the completion of suspending interpretation agency services for some speakers and information on the continuation of interpretation agency services for the remaining speakers.

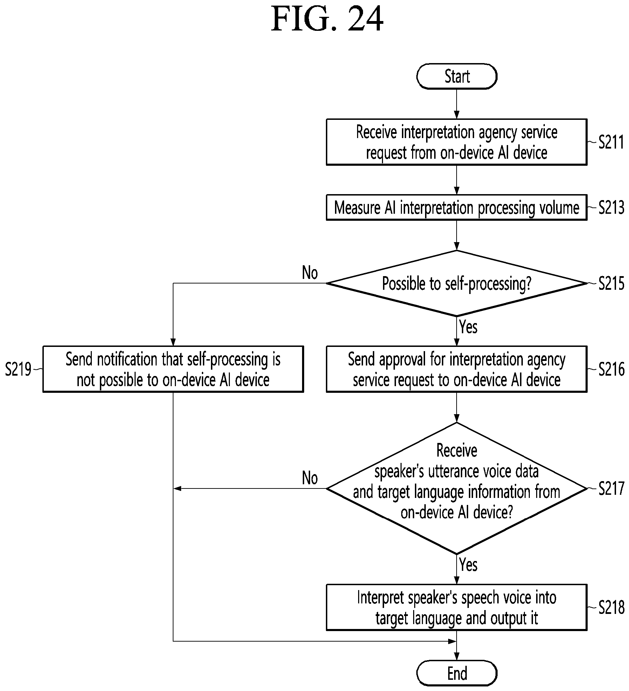

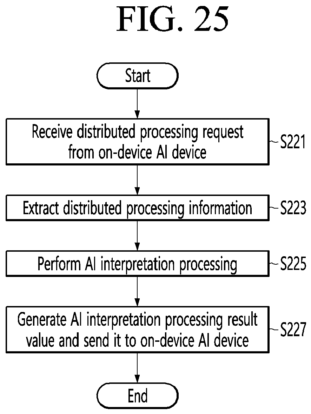

FIG. 24 and FIG. 25 are diagrams for explaining a method for providing multi-party interpretation services by an AI interpretation processing device that is communicatively connected to an on-device AI device according to an embodiment of the present disclosure.

As illustrated in FIG. 24, the AI interpretation processing device that is communicatively connected to an on-device AI device of the present disclosure can include a communication module that is communicatively connected to the on-device AI device, a memory that stores an AI model for AI interpretation processing, and a processor that performs AI interpretation processing in response to an interpretation agency service request from the on-device AI device.

The processor of the AI interpretation processing device can receive an interpretation agency service request from the on-device AI device (S211).

Then, when the processor of the AI interpretation processing device receives an interpretation agency service request from the device AI device, the processor of the AI interpretation processing device can measure the amount of the AI interpretation processing corresponding to the interpretation agency service request (S213).

Next, the processor of the AI interpretation processing device can determine whether self-interpretation processing is possible based on the measured amount of the AI interpretation processing (S215).

Next, if the processor of the AI interpretation processing device determines that self-interpretation processing is possible, the processor can transmit an approval for the interpretation agency service request to the on-device AI device (S216).

If the processor of the AI interpretation processing device determines that self-interpretation processing is impossible, the processor can transmit a notification message notifying that self-processing of the interpretation agency service is impossible to the on-device AI device (S219).

Then, the processor of the AI interpretation processing device can check whether the utterance voice data of the speaker and the target language information to be interpreted are received from the on-device AI device (S217).

Next, the processor of the AI interpretation processing device can interpret the utterance voice of the speaker into the target language and output it when it receives the utterance voice data of the speaker and the target language information to be interpreted from the on-device AI device (S218).

Here, the processor of the AI interpretation processing device can, when it receives a request to stop interpretation agency service for some speakers from the on-device AI device, stop interpretation agency service for some speakers and transmit to the on-device AI device information on completion of the interpretation agency service stop for some speakers and information on continuing interpretation agency service for the remaining speakers.

As illustrated in FIG. 25, the AI interpretation processing device that is connected to the on-device AI device of the present disclosure can receive a distributed processing request from the on-device AI device (S221).

Then, the processor of the AI interpretation processing device can extract distributed processing information from the distributed processing request when receiving the distributed processing request from the on-device AI device (S223).

Here, the processor of the AI interpretation processing device can extract distributed processing information including AI model information, location information, distributed processing amount information, and input data corresponding to the distributed processing portion from the distributed processing request.

Next, the processor of the AI interpretation processing device can perform AI interpretation processing based on the distributed processing information (S225).

Next, the processor of the AI interpretation processing device can generate an AI interpretation processing result value and provide the generated AI interpretation processing result value to the on-device AI device (S227).

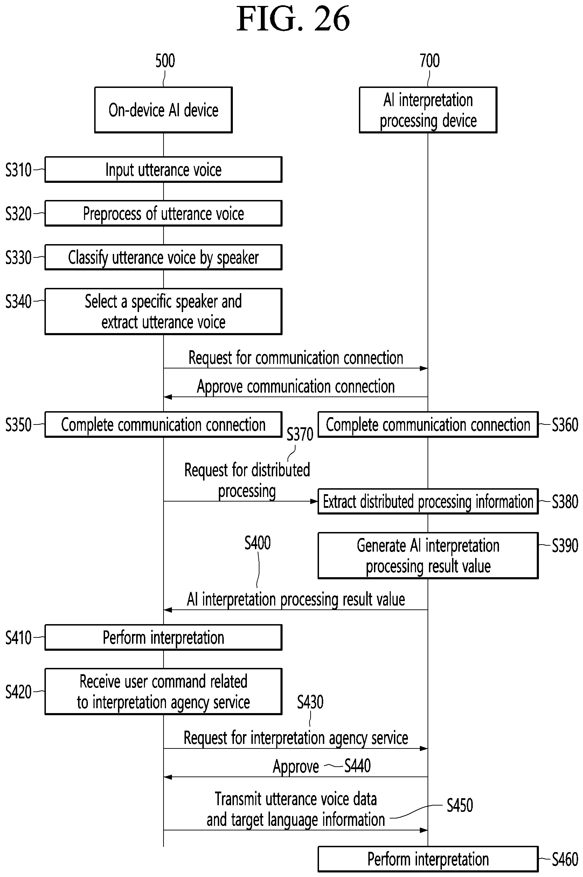

FIG. 26 is a diagram for explaining a method for providing a multi-party interpretation service of an on-device AI system according to an embodiment of the present disclosure.

As illustrated in FIG. 26, when utterance voices are input from multiple speakers (S310), the on-device AI device 500 preprocesses the utterance voices (S320), classifies the preprocessed utterance voices by speaker (S330), and when a specific speaker is selected from the multiple speakers, the utterance voice of the selected specific speaker can be extracted from the utterance voices classified by speaker (S340).

Next, the on-device AI device 500 converts the utterance voices of a specific speaker into text to measure the amount of AI interpretation processing for interpreting the current language into a target language, and determines whether distributed processing is required by checking whether the measured amount of AI interpretation processing exceeds the self-processing capacity.

Next, the on-device AI device 500 can select the AI interpretation processing device 700 for distributed processing if the measured amount of the AI interpretation processing exceeds its own processing capacity.

Then, the on-device AI device 500 requests a communication connection to the AI interpretation processing device 700, and the AI interpretation processing device 700 approves the communication connection for the communication connection request of the on-device AI device 500, so that the AI interpretation processing device 700 and the on-device AI device 500 can be connected to each other (S350, S360).

Next, the on-device AI device 500 can request distributed processing of AI interpretation processing to the AI interpretation processing device 700 (S370).

Next, when the AI interpretation processing device 700 receives a distributed processing request from the on-device AI device 500, it extracts distributed processing information from the distributed processing request (S380), performs AI interpretation processing based on the distributed processing information to generate an AI interpretation processing result value (S390), and provides the generated AI interpretation processing result value to the on-device AI device 500 (S400).

Then, when the on-device AI device 500 receives a first AI interpretation processing result value from the AI interpretation processing device 700, it can provide a final interpretation result based on the first AI interpretation processing result value and the second AI interpretation processing result value processed by itself (S410).

Then, when a user command requesting an interpretation agency service is input, the on-device AI device 500 requests an interpretation agency service for an utterance voice of a specific speaker to the AI interpretation processing device 700 (S430), and when an approval for the interpretation agency service request is received from the AI interpretation processing device 700 (S440), the AI interpretation processing device 700 can transmit the utterance voice data of the specific speaker and the target language information to be interpreted to the AI interpretation processing device 700 so that the utterance voice of the specific speaker can be interpreted into the target language and output (S450).

Next, when the AI interpretation processing device 700 receives the utterance voice data of the speaker and the target language information to be interpreted from the on-device AI device 500, the AI interpretation processing device 700 can interpret the utterance voice of the speaker into the target language and output it (S460).

In this way, the present disclosure extracts the utterance voice of a specific speaker from among the utterance voices classified by the speaker when a specific speaker is selected from among multiple speakers and interprets it into a target language, thereby enabling real-time accurate interpretation by identifying the conversation between multiple speakers by speaker.

In addition, the present disclosure can improve the AI interpretation processing processing speed and the accuracy and service quality of the interpretation processing result value by selecting an externally located AI interpretation processing device and requesting distributed processing of AI interpretation processing when the amount of AI processing for interpreting the utterance voice of the speaker exceeds the self-processing capacity.

In addition, the present disclosure can minimize power consumption and reduce heat generation by distributing AI interpretation processing together with an externally located AI interpretation processing device, thereby improving performance and lifespan.

The above-described present disclosure can be implemented as a computer-readable code on a medium in which a program is recorded. The computer-readable medium includes all kinds of recording devices in which data that can be read by a computer system is stored. Examples of computer-readable media include a hard disk drive (HDD), a solid-state disk (SSD), a silicon disk drive (SDD), a ROM, a RAM, a CD-ROM, a magnetic tape, a floppy disk, an optical data storage device, etc. In addition, the computer can include a processor of an artificial intelligence device.

## Claims

1. A device including an on-device artificial intelligence (Al) comprising:
an input module configured to receive sensing data associated with a plurality of utterances from a plurality of speakers; and
a processor configured to perform AI processing to interpret an utterance of the plurality of utterances into a target language,
wherein the processor is configured to
preprocess the plurality of utterances,
classify each preprocessed utterance of the preprocessed plurality of utterances to a speaker of the plurality of speakers,
extract an utterance of a specific speaker of the plurality of speakers from the classified plurality of utterances,
interpret the utterance of the specific speaker into the target language, and
output the utterance of the specific speaker in the target language.

2. The device of claim 1, wherein preprocessing the plurality of utterances comprises analyzing a frequency corresponding to the plurality of utterances and removing a noise frequency.

3. The device of claim 1 or 2, wherein classifying each preprocessed utterance comprises extracting voice features of the preprocessed plurality of utterances, identifying the plurality of speakers for the preprocessed plurality of utterances based on the extracted voice features, and classify the preprocessed plurality of utterances by the identified plurality of speakers.

4. The device of any of the preceding claims, wherein the processor is configured to select the specific speaker, wherein selecting the specific speaker comprises generating and providing a speaker list corresponding to the plurality of speakers, and selecting the specific speaker as a result of receiving a user input for selecting at least one speaker included in the speaker list.

5. The device of any of the preceding claims, wherein the processor is configured to select the specific speaker, wherein selecting the specific speaker comprises to analyzing utterance data volume for each speaker of the plurality of speakers for a predetermined period of time, and selecting the specific speaker from among the plurality of speakers based on the utterance data volume for each speaker of the plurality of speakers.

6. The device of any of the preceding claims, wherein extracting the utterance of the specific speaker comprises removing utterances of the remaining speakers of the plurality of speakers excluding the specific speaker.

7. The device of any of the preceding claims, wherein interpreting the utterance of the specific speaker comprises determining a current language by converting the utterance of the specific speaker into a text, determining whether self-interpretation processing is possible by measuring an amount of AI interpretation processing for interpreting the current language into the target language, and interpreting the utterance of the specific speaker into the target language by self-processing AI interpretation processing as a result of determining whether self-interpretation processing is possible.

8. The device of claim 7, wherein determining whether self-interpretation processing is possible comprises comparing the measured amount of AI interpretation processing to a self-processing capacity.

9. The device of claim 8, wherein determining whether self-interpretation processing is possible comprises determining that self-interpretation processing is impossible after the measured AI interpretation processing amount exceeds the self-processing capacity, wherein the processor is configured to:
select an AI interpretation processing device for distributed processing of AI interpretation processing,
request the distributed processing of the AI interpretation processing to the selected AI interpretation processing device, and
after a first AI interpretation processing result value is received from the AI interpretation processing device, provide a final interpretation result value based on the first AI interpretation processing result value and a self-processed second AI interpretation processing result value.

10. The device of claim 9, wherein requesting the distributed processing of the AI interpretation processing comprises calculating an excess amount in addition to the self-processing capacity among the measured amount of the AI interpretation processing, determining that a processing amount of the selected AI interpretation processing device is greater than the calculated excess amount, and requesting the distributed processing of AI interpretation processing for the excess amount to the AI interpretation processing device.

11. The device of claim 9, wherein requesting the distributed processing of the AI interpretation processing comprises calculating an excess amount in addition to the self-processing capacity among the measured amount of the AI interpretation processing, extracting a distributed processing portion corresponding to the calculated excess amount among the AI interpretation processing, and requesting the distributed processing of the AI interpretation processing for the extracted distributed processing portion to the selected AI interpretation processing device.

12. The device of claim 9, wherein providing the final interpretation result value comprises to providing the final interpretation result value interpreting the utterance of the specific speaker into the target language by mapping the first AI interpretation processing result value received from the AI interpretation processing device and the self-processed second AI interpretation processing result value to each other.

13. The device of any of the preceding claims, further comprising a communication module wired or wirelessly connected to an AI interpretation processing device performing interpretation processing based on an AI model,
wherein after receiving a distributed processing request from the AI interpretation processing device, the processor is configured to extract distributed processing information from the distributed processing request, generate an AI interpretation processing result value by performing AI interpretation processing based on the distributed processing information, and provide the generated AI interpretation processing result value to the AI interpretation processing device.

14. The device of any of claims 1 to 12, further comprising a communication module wired or wirelessly connected to an AI interpretation processing device performing interpretation processing based on an AI model, and
wherein after receiving an interpretation agency service request from the AI interpretation processing device, the processor is configured to determine whether self-interpretation processing is possible by measuring an amount of the AI interpretation processing corresponding to the interpretation agency service request, after it is determined that the self-interpretation processing is possible, transmit an approval for the interpretation agency service request to the AI interpretation processing device, and after the utterance voice data of the speaker and target language information to be interpreted are received from the AI interpretation processing device, interpret the utterance voice of the speaker into the target language and output it.

15. A method of providing a multi-party interpretation service of a device including an on-device artificial intelligence (Al), the method comprising:
receiving a plurality of utterances from a plurality of speakers;
preprocessing the plurality of utterances;
classifying each preprocessed utterance of the preprocessed plurality of utterances to a speaker of the plurality of speakers;
extracting an utterance of a specific speaker of the plurality of speakers from the classified plurality of utterances;
interpreting the utterance of the specific speaker into the target language; and
outputting the utterance of the specific speaker in the target language.
